# EUROPEAN PATENT APPLICATION

(11) **EP 4 162 791 A1**
(43) Date of publication of application: **12.04.2023**
(21) Application number: 22200629.8
(22) Date of filing: 10.10.2022
(51) Int. Cl.: A01G 13/02

(54) **COVER FOR CULTIVATIONS AND PROCESS FOR JOINING TOGETHER TWO PROTECTION SHEETS OF A COVER FOR CULTIVATIONS**

(30) Priority: 08.10.2021 IT 202100025922
(71) Applicant: Simple Technology Srls, 95040 Mazzarrone (CT) (IT)
(72) Inventor: PUCCI, Bruno, 95041 Caltagirone (CT) (IT)
(74) Representative: Gallo, Luca

(57) **Abstract**

1. Cover (100) for cultivations which comprises:

- a support structure (101) provided with at least one support cable (102) extended along a main longitudinal direction (Y);

- at least one protection sheet (105, 105A, 105B), which is supported by said support structure (101), is provided with a main longitudinal extension substantially parallel to said support cable (102) and converges towards said support cable (102) from one side thereof with a lateral edge (105');

- junction means of the lateral edge of said at least one protection sheet (105, 105A, 105B);

wherein said junction means comprise:

- a plurality of junction tools (1) placed spaced along the longitudinal extension of the lateral edge (105') of said protection sheet (105, 105A, 105B) and each provided with

- at least one stem (2) provided with a hook-shaped first end (3) and with a second end (4) opposite said first end (3);

- at least one elongated grip portion (5), which is transversely fixed to said stem (2) at an intermediate position of said grip portion (5);

- the lateral edge (105') of said protection sheet (105, 105A, 105B) being at least partially wound around said support cable (102) and traversed by said stem (2) due to through holes made on the lateral edge (105') of said protection sheet (105, 105A, 105B);

- the lateral edge (105') of said protection sheet (105, 105A, 105B) also being at least partially wound around the grip portion (5) of each said junction tool (1);

- the hook-shaped first end (3) of said stem (2) being connected to a support element (106) of said support structure (101).

## Description

### Field of application

The present invention regards a cover for cultivations and a process for joining together two sheets of a cover of a protection for cultivations, according to the preamble of the respective independent claims.

More in detail, the present invention is intended to be used in the field of farming for protecting, with sheets (whether these are in the shape of continuous sheets or in net form), for example orchards, vineyards, nurseries, horticultural cultivations or still other cultivations, from weather events such as hail, rain or from adverse weather conditions such as wind or excessive sun exposure, or from attacks by animals such as birds or even insects.

More in detail the tool or the process for joining together the sheets of a cover can be employed in association with any type of cover, i.e. whether shed type or arch type or still other cover types.

The invention is therefore inserted in the field of cultivation farming and of production of equipment for the covers of the cultivations.

### State of the art

Different types of covers are known, which have in common the presence of a support structure and a plurality of sheets supported by the support structure above the cultivations. As is known, the covers - based on the slope and on the shape that is given to the protection sheet - can for example be of tilted type (or shed type), of arch type or even of flat type if the sheets lie on a same horizontal plane.

The covers can also be classified as static or dynamic, depending on whether or not it is provided to move the sheets in order to aerate the cultivations.

In the event in which the cover is extended without substantially interruption over the entire area of the cultivations then, as is known, it is necessary to join together the flanked lateral edges of the protection sheets.

This operation is generally attained with cords that pass through suitable slot openings made at the edges of the two flanked sheets so as to sew together the sheets.

Such method for joining the sheets has in practice demonstrated that it takes a long time to achieve, is not very practical and quite costly considering also that the cords employed have a limited duration over time.

Known from the patent application IT201800010351 is a cover for cultivations in which the protection sheets are provided with enlarged edges, which are connected to suitable junction sleeves provided with two coupling seats in which the corresponding enlarged edges of two adjacent sheets to be joined are inserted. Also the latter solution of known type, nevertheless, has proven to be not very practical, in particular due to the need to attain specific sheets with reinforced edges.

### Presentation of the invention

In this situation, the problem underlying the present invention is therefore that of overcoming the drawbacks shown by the solutions of known type, by providing a process for joining together two protection sheets of a cover for cultivations which is simple and quick to use.

A further object of the present invention is to provide a cover for cultivations, which is provided with protection sheets with flanked lateral edges that are easily connectable to and disconnectable from each other.

A further object of the present invention is to provide a process for joining together two protection sheets of a cover for cultivations which involve very limited costs.

### Brief description of the drawings

The technical characteristics of the invention, according to the aforesaid objects, can be clearly seen in the contents of the below-reported claims and the advantages thereof will be more evident in the following detailed description, made with reference to the enclosed drawings, which represent a merely exemplifying and non-limiting embodiment of the invention, in which:
- figure 1 shows a perspective view of the tool for joining protection sheets of a cover for cultivations employed in the present invention;
- figure 2 shows the tool of figure 1 in a second perspective view;
- figure 3 shows the tool of figure 1 in a front view;
- figure 4 shows the tool of figure 1 in a side view;
- figure 5 shows a perspective view of the tool for joining protection sheets of a cover for cultivations according to one embodiment;
- figure 6 shows the tool of figure 5 in a second perspective view;
- figures 7 and 8 show two components of the tool for joining protection sheets of a cover for cultivations according to a second variant, employable together or separately;
- figure 9 shows a cover for cultivations, substantially of known type, on which a tie rod of the cover has been arranged for cultivations according to the present invention;
- figure 10 shows a cover for cultivations according to the present invention;
- figures 11-19 show a sequence of steps of the process for joining together two protection sheets of a cover of a protection for cultivations according to the present invention;
- figures 20-24 show a sequence of steps of the process for joining together two protection sheets of a cover for cultivations, i.e. for pulling the lateral edge of a protection sheet of a cover for cultivations by means of a first variant of the invention which makes use of the tool illustrated in figure 5 and with a second tool shown in figure 7;
- figures 25, 26 show a sequence of steps of the process for joining two edges of a sheet for a repair, i.e. of two protection sheets of a cover for cultivations by means of the preceding variant that makes use of the tool illustrated in figure 5 and of the second tool shown in figure 7;
- figures 27-30 show a sequence of steps of the process for joining two edges of a sheet or of two protection sheets of a cover for cultivations according to a second variant of the present invention that makes use of the second tool illustrated in figure 7 and of one or more third tools illustrated in figure 8.

### Detailed description of a preferred embodiment

With reference to the enclosed drawings, reference numbers 1 and 100 overall respectively indicate a tool for joining protection sheets of covers for cultivations, and a cover for cultivations, object of the present invention.

The cover 100 can be employed for protecting cultivations of different type such as orchards, vineyards, nurseries, horticultural cultivations or still other cultivations, from weather events such as hail, rain or from adverse weather conditions such as wind or excessive sun exposure, or from attacks by animals such as birds or even insects.

In addition, the cover according to the invention can be of different type, i.e. shed type, arch type or of flat type.

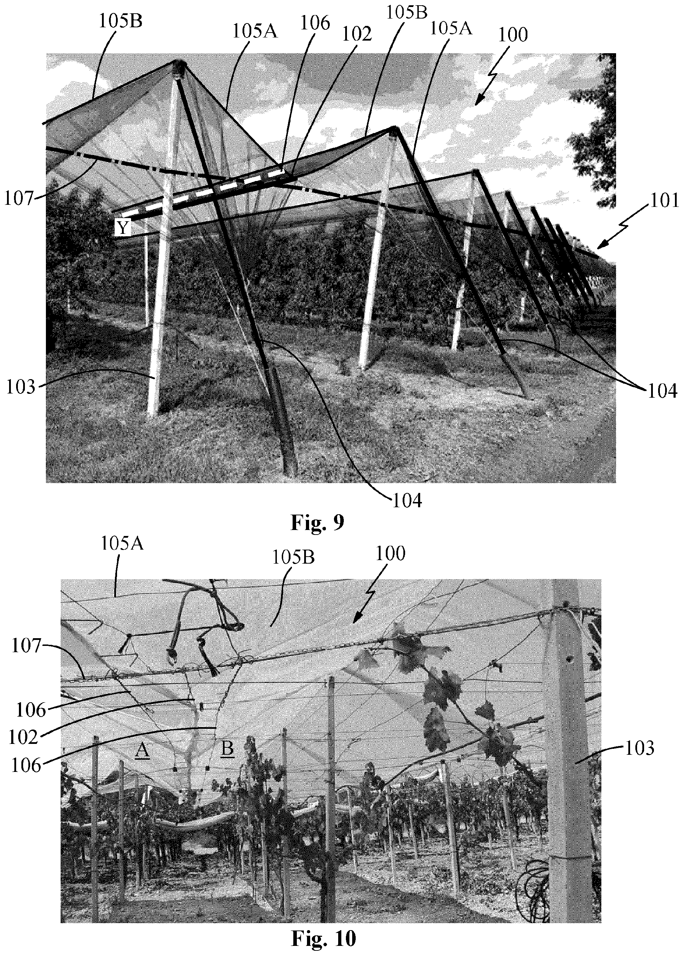

More in detail, the cover for cultivations 100 according to the present invention comprises, in a per se conventional manner, a support structure 101 provided with at least one support cable 102 (also known as "track" in the jargon of the field) extended along a main longitudinal direction indicated with Y in figure 9.

The support structure 101 preferably comprises a plurality of support poles 103 of which some are placed along the rows and others placed at the ends of the cultivations. The poles 103 are in the examples depicted in the enclosed figures made, for example, of precompressed reinforced concrete, since it can nevertheless be made of wood metal or another material. The poles 103 are for example placed at a distance preferably of 3.5-10 meters from each other and are connected by cables, in particular of galvanized iron or steel both in longitudinal and transverse sense, which include the abovementioned support cable 102.

The poles 103 placed at the ends are anchored to the ground by means of tie rods 104 fixed to the ground in order to confer stability and safety to the cover 100.

The cover 100 according to the invention also comprises at least one protection sheet and advantageously in accordance with the embodiment described at least two protection sheets 105, of which at least one first and one second protection sheet 105A and 105B, which are supported by the support structure 101 and are extended above the cultivations with a main longitudinal extension substantially parallel to the support cable 102. Generally the cover 100 will have a plurality of protection sheets 105 longitudinally flanked in order to cover the entire area affected by the cultivations. Each protection sheet 105 converges on opposite sides of the support cable 102 towards the same support cable 102 having respective lateral edges 105', longitudinally flanking each other at the support cable 102 itself.

The protection sheets 105 can for example be constituted by sheets made of plastic, e.g. made of high-density polyethylene (HDPE) enriched with substances which produce a thermal and insulating effect, or by anti-hail nets, or they can be double in order to attain a double anti-hail and anti-rain cover.

The cover according to the invention then comprises junction means for the flanked lateral edges 105' of the two protection sheets 105A and 105B in order to join them together along their longitudinal extension.

In the case of single protection sheet 105, the junction means will only be intended to connect the lateral edge of such protection sheet to the support structure 101 of the cover 100.

According to the idea underlying the present invention, the junction means comprise a plurality of junction tools 1 placed spaced along the longitudinal extension of the flanked edges 105' of the protection sheets 105A, 105B.

More in detail, each junction tool 1 is provided with a stem 2, provided with a first hook-shaped end 3 and with a second end 4 opposite the first end 3 and with an elongated grip portion 5, which is transversely fixed to the stem 2 at an intermediate position 5' of the grip portion 5.

According to the invention, the cover 100 therefore provides that the flanked lateral edges 105' of the two protection sheets 105A, 105B (or the edge of the single protection sheet in the event in which the cover provides for only one protection sheet) are partially wound around the support cable 102, in particular so as to start to be superimposed starting from a first side A of the support cable 102. The two protection sheets 105A, 105B are traversed by the stem 2 above said support cable 102, due to through holes made on the flanked and superimposed lateral edges 105' of the two sheets 105A, 105B and in particular due to two first holes made on the flanked lateral edges 105' (of the two superimposed sheets 105A, 105B) and to at least one second through hole made on the second sheet 105B coming from the second side B.

In particular, the stem 2 traverses (from the first side A towards the second side B) the lateral edge 105' (on the first side A) of the second sheet 105B (in the corresponding first hole), the lateral edge 105' of the first sheet 105A (in the corresponding first hole), and hence the part of the second sheet 105B coming from the second side B (in the corresponding second hole).

Advantageously, the stem 2 of the junction tool 1 traverses (in a corresponding further first hole) also a possible turning up of the lateral edge 105' of the first sheet 105A placed between the lateral edge 105' (placed on the first side A) of the second sheet 105B and the upstream part of the lateral edge 105' of the first sheet 105A (placed before the bend at the support cable 102).

As will be specified hereinbelow in the present description, the process for joining together two protection sheets of a cover for cultivations provides that the aforesaid holes are attained due to a hook-shaped end 3 of the junction tool 1.

More in detail, the first protection sheet 105A coming from the first side A of the support cable 102 goes beyond the support cable 102 above this in order to go into the second side B before then returning below the support cable 102 where it is flanked and on the lower part superimposed by the second protection sheet 105B coming from the second side B. The two sheets 105A and 105B thus superimposed are then traversed by the stem 2 of the tool 1 as explained above, and such stem 2 continues through a second hole on the second protection sheet 105B.

According to the invention, moreover, the flanked lateral edges 105' of the two protection sheets 105A and 105B (i.e. the lateral edge of the single protection sheet) are also partially wound around the elongated grip portion 5 of each tool 1.

The first hook-shaped end 3 of the stem 2 (advantageously terminating with a pointed portion 3') is then connected to a support element 106 of the support structure 101 in order to prevent the taut sheets 105A, 105B from being unrolled.

The element for supporting the support structure 101 is advantageously a connection cable 106 parallel to the support cable 102 and placed at a distance compatible with the length of the stem 2 of the tool 1 in order to allow the hook-shaped end 3 of the tool 1 to be stably anchored thereto. Preferably, two connection cables 106 are provided for which are extended parallel to each other on the two sides of the support cable 102 and parallel thereto.

The two connection cables 106 can serve for separating and separately fixing the sheets 105A, 105B. In accordance with the present invention the support cable 102, which is central with respect to the connection cables 106, serves as a point of support for the elongated grip portion 5 of each tool 1 whose hook-shaped ends 3 of the stems 2 can then be connected both on the right and left on the two connection cables 106.

In accordance with the example of cover 100 illustrated in the enclosed figures 9 and 10, the cover is of shed type and the protection sheets 105 therefore converge two-by-two in a tilted manner on opposite sides of the top line towards the support cables 102, which are placed at the line of minimum height. Of course without departing from the protective scope of the present patent, the cover 100 could be attained for example as an arch (or in accordance with other types) and hence have the support cables 102 advantageously still placed at the minimum height line but with the sheets that converge no longer with tilted lying planes, but rather planes with curved profile.

The support cables 102 are advantageously connected to a transverse tie rod indicated with the reference number 107 in the enclosed figures, directly supported by the support poles 103 placed at the margin of the cover 100.

Hereinbelow, a junction tool 1 is described for joining protection sheets 105 of covers 100 for cultivations, in particular of the type described up to now, and regarding which for the sake of simplicity the same reference numbers reported above will be maintained, even if the junction tool 1 can also be employed for covers different from that described above.

More in detail, each junction tool 1 is provided with a stem 2, provided with a first hook-shaped end 3 and with a second end 4 opposite the first end 3 and with an elongated grip portion 5.

The grip portion 5 with elongated shape is delimited by two long sides 5', substantially parallel, and by two short connector sides 5" and is transversely fixed with one of the two long sides 5', to the second end of the stem 2 at an intermediate position, advantageously median, of the grip portion 5.

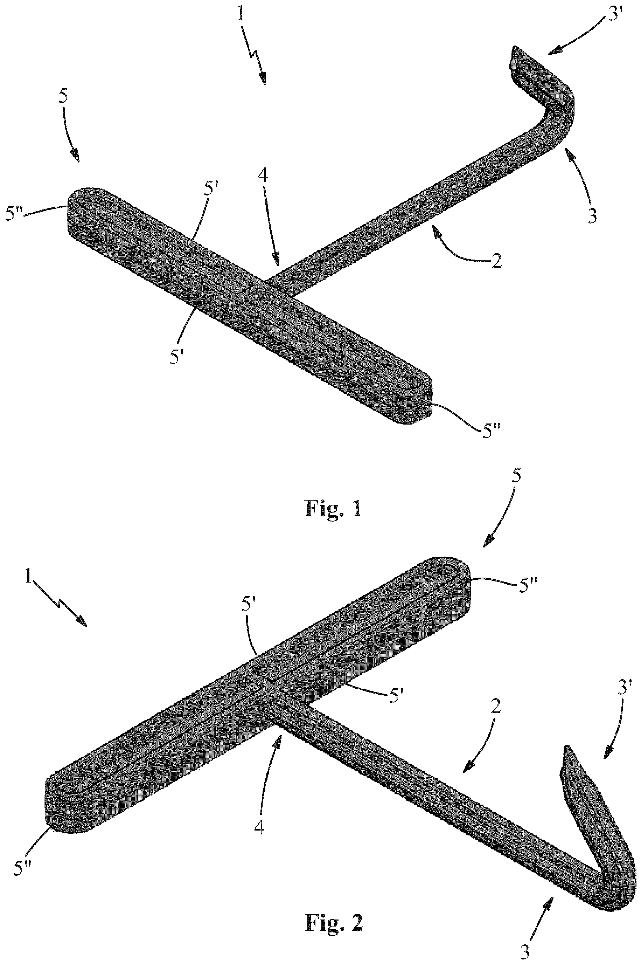

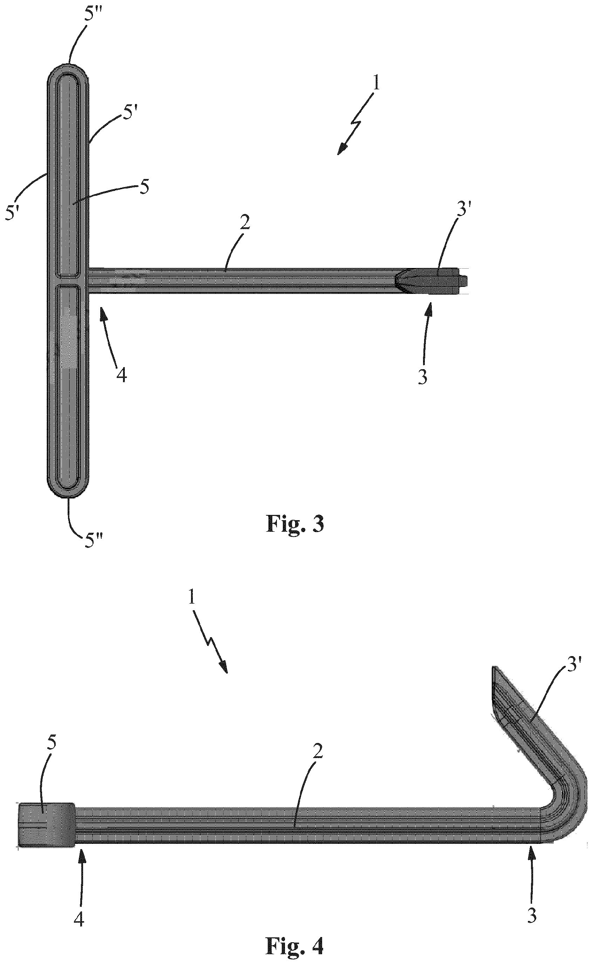

In accordance with the embodiment of figures 1-4, the junction tool 1 has the stem 2 and the grip portion 5 attained in a single body made of plastic material, preferably made of reinforced plastic material.

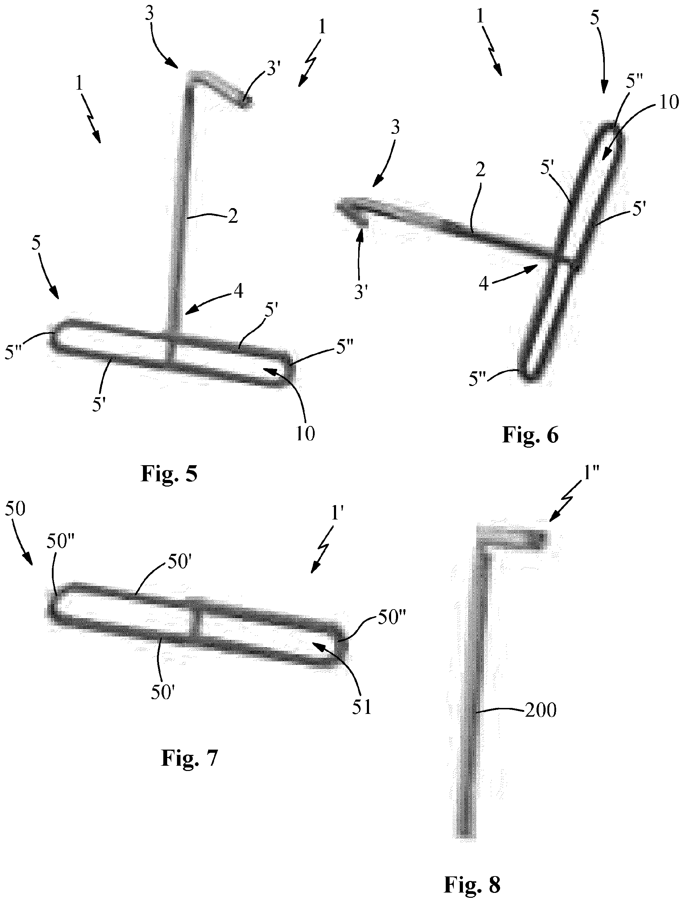

Otherwise, in accordance with the embodiment of figures 5 and 6, the junction tool 1 is obtained with a bent steel wire.

Without departing from the protective scope of the present patent the junction tool 1 can be completely made of metal, completely made of plastic or of multiple different materials, for example with a part of metallic material and a part of plastic material.

In accordance with one embodiment of the junction tool 1 not illustrated in the enclosed figures, the stem 2 and the grip portion 5 can be joined to each other in a removable manner.

Preferably, the grip portion 5 of the junction tool 1 is in perimeter frame shape, centrally delimiting a through opening 10 in order to allow different use modes, as specified hereinbelow.

Advantageously, the two short connector sides 5" of the grip portion 5 have substantially rounded shape, in particular so as to not tear the protection sheet 105 when they come into contact therewith.

Preferably, the stem 2 is extended, starting from its second end 4, from the grip portion 5 orthogonal to the latter.

Advantageously, the first end 3 (hook-shaped) of the stem 2 is tilted towards the remaining portion of the latter, forming, with such remaining portion, an angle smaller than 90° and, preferably, comprised between 70° and 30° and, still more preferably, between 40° and 50°.

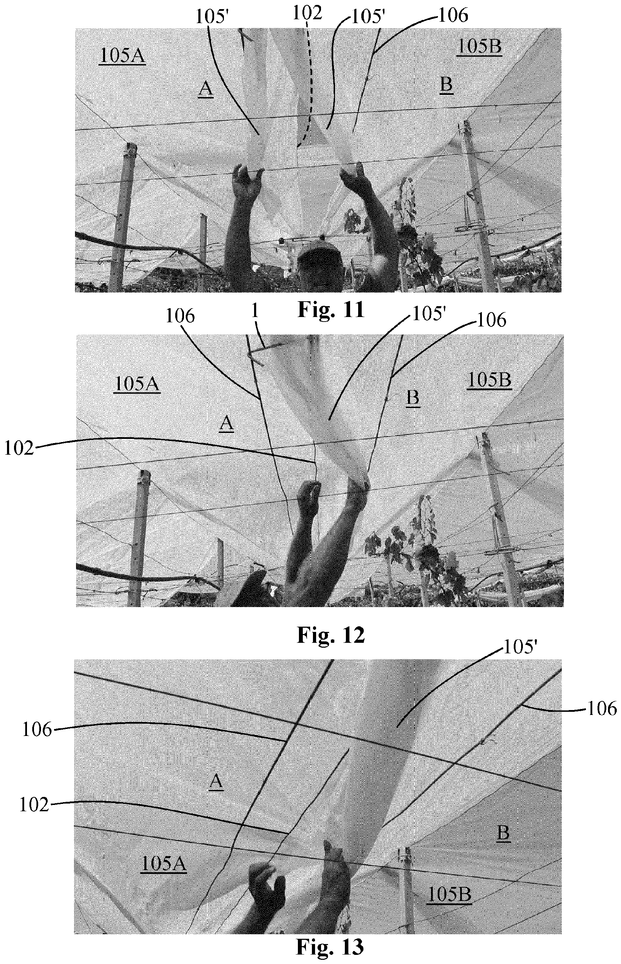

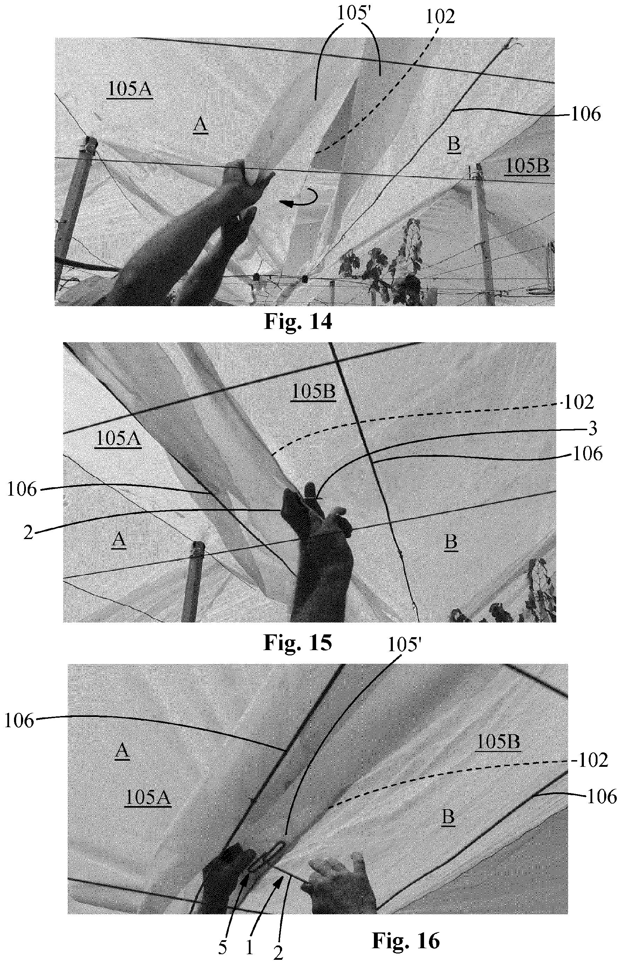

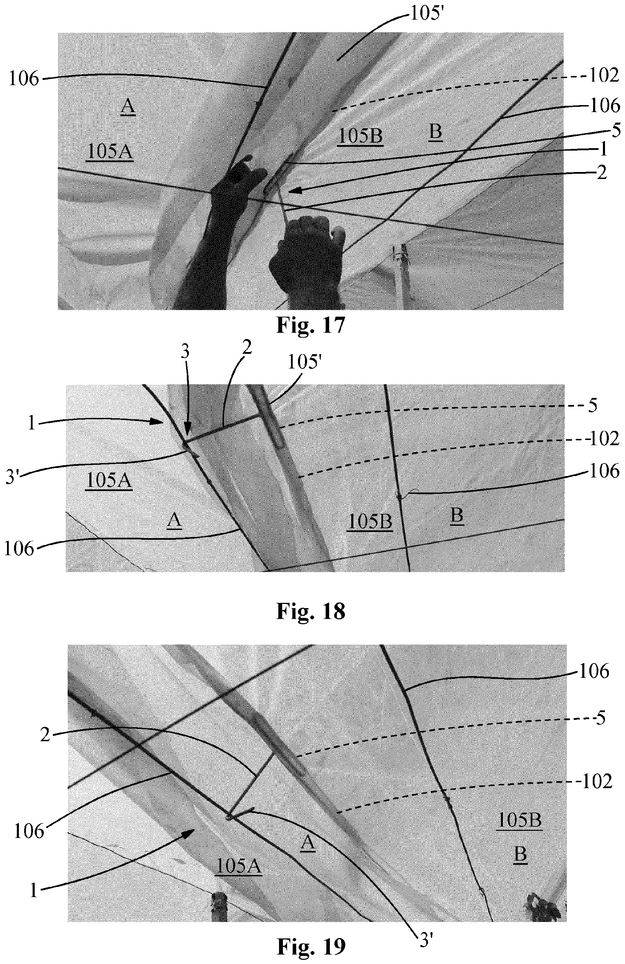

Also forming the object of the present invention is a process for joining together at least one protection sheet and the support structure of the cover (in this case, therefore, in order to support the edge of the protection sheet), i.e. for joining together two sheets of a cover for cultivations of the type described up to now and regarding which the same reference numbers will be maintained for the sake of description simplicity. The process is illustrated hereinbelow with regard to the case of two protection sheets; nevertheless, the process should be considered extended and aimed to support a single protection sheet on the structure of the cover. In the latter case, the single steps can be applied mutatis mutandis to a single sheet rather than to two sheets as described in detail herein. In accordance with the embodiment illustrated in figures 11-19, the process comprises the following operative steps.

It is initially provided to arrange a cover 100, of the type described above, i.e. provided with a support structure 101 provided with at least one support cable 102 extended along a main longitudinal direction Y and with at least one first and one second protection sheet 105A, 105B, which are supported by the aforesaid support structure 101 above the cultivations.

Of course, the cover 100 will comprise a number generally usually much greater than two protection sheets 105, i.e. a number sufficient to completely cover the area set for the cultivations. Correspondingly, the number of support cables 102 will be adapted to support such plurality of protection sheets 105.

The two protection sheets 105A, 105B, or more realistically in the case of a plurality thereof, the two sheets of each pair of protection sheets, are provided with a main longitudinal extension substantially parallel to the corresponding support cable 102 and converge on opposite sides towards the same support cable 102 with respective lateral edges 105', longitudinally flanking each other at the same support cable 102.

The process therefore provides for arranging a plurality of junction tools 1, preferably of the type described above, each provided with a stem 2, provided with a first hook-shaped end 3 and with a second end 4 opposite the first end 3, as well as with an elongated grip portion 5, which is transversely fixed to the first end 4' of the stem 2 at an intermediate position of the grip portion 5.

According to the invention, the process then provides for a first winding of the flanked lateral edges 105' of the two protection sheets 105A, 105B around the support cable 102 starting from a first side A of the latter, and hence the perforating of the first and second protection sheets 105A, 105B by means of the first end 3 of the stem 2, above the support cable 102 and starting from the first side A towards the second side B in a manner such that the stem 2 traverses the two superimposed protection sheets 105A, 105B, making two first through holes thereon at the first side A and subsequently traverses the sheet 105B coming from the second side B, making at least one second through hole thereon. In particular, the stem 2 traverses (from the first side A towards the second side B) the lateral edge 105' (on the first side A) of the second sheet 105B (in the corresponding first hole), the lateral edge 105' of the first sheet 105A (in the corresponding first hole), and hence the part of the second sheet 105B coming from the second side B (in the corresponding second hole).

Advantageously, the stem 2 of the junction tool 1 makes (by means of the first end 3 of the stem 2) a further first hole, a possible turning up of the lateral edge 105' of the first sheet 105A placed between the lateral edge 105' (placed on the first side A) of the second sheet 105B and the upstream part of the lateral edge 105' of the first sheet 105A (placed before the bend at the support cable 102). At this point, the process according to the invention provides for manually attaining the sliding the stem 2 in the first holes and in the second hole up to bringing the grip portion 5 in abutment against the superimposed lateral edges 105' of the two protection sheets 105A, 105B.

The process continues sequentially by providing for the winding of the superimposed lateral edges 105' of the two protection sheets 105A, 105B around the support cable 102, rotating the stem 2 from the second side B towards the first side A so as to partially wind the superimposed lateral edges 105' of the two protection sheets 105A, 105B around the grip portion 5 already in abutment, as stated above, against the same superimposed lateral edges 105'. One such winding of the sheets on the grip portion 5 and of the latter around the support cable 102 determines a twisting moment on the junction tool 1 which tends to unwind it.

A final step is then provided for connecting the first hook-shaped end 3 of the stem 2 of the tool 1 to a support element 106 of the support structure 101, in particular obtained with a connection cable parallel to the support cable 102.

As explained above, the element for supporting the support structure 101 is advantageously a connection cable 106 parallel to the support cable 102 and placed at a distance compatible with the length of the stem 2 of the tool 1 in order to allow the hook-shaped end 3 of the tool 1 to be stably anchored thereto.

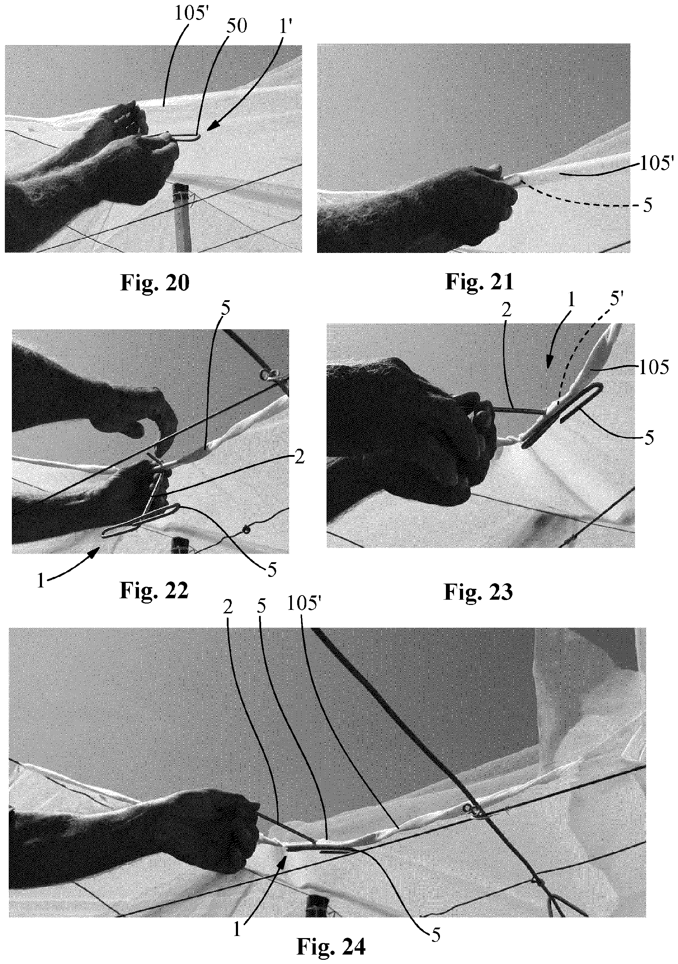

In accordance with a first embodiment of the invention, the tool 1 described above (figures 1-6) is associated with a second tool 1' (figure 7) constituted by only the grip portion of the above-described tool 1 (which in this case will be identified hereinbelow as the "first tool" while the grip portion as the second grip portion 50), whether it is made of plastic material, bent steel wire or a part in metal and a part in plastic. Such second grip portion in order to distinguish it from that described above will be numbered with the reference number 50 and its parts will be indicated with 50' and 50" while the central opening will be indicated with 51. In this case, in accordance with the sequence of operations reported in figures 20-24, first the lateral edge 105' of a protection sheet 105 is wound around the second grip portion 50 of the second tool 1', and then the stem 2 of the first tool 1 is inserted starting from the first hook-shaped portion 3 in a hole made with the tip 3' of the first hook-shaped portion 3 on the sheet 105 wound at the through opening 51 of the second grip portion 50 of the second tool 1', by sliding the stem 2 up to bringing the grip portion 5 of the first tool 1 in abutment against the grip portion 50 enclosed by the sheet 105 of the second tool 1'. At this point, it is possible to pull the protection sheet 105 with force, without risking to break it, pulling starting from the stem 2 of the first tool 1 as illustrated in figure 24.

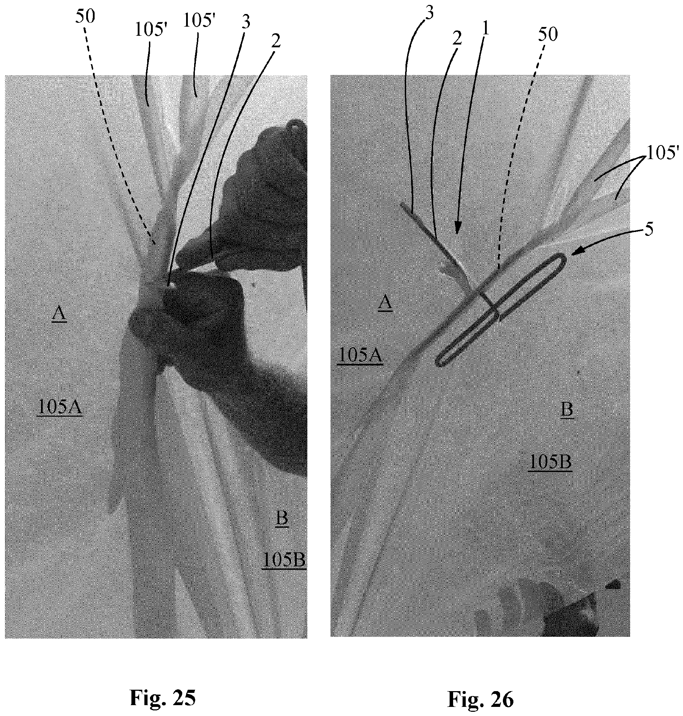

Otherwise, in accordance with the sequence of operations reported in figures 25 and 26, the tools 1, 1' according to the abovementioned first embodiment will be employed for joining together the flanked lateral edges 105' of two sheets or the opposite edges of a cut on only one sheet 105. In this case, it will first be provided to wind the lateral edges 105' of two contiguous protection sheets 105 (i.e. constituted by the opposite edges of a cut on the sheet 105) around the second grip portion 50 of the second tool 1', and hence to insert - starting from the first hook-shaped portion 3 - the stem 2 of the first tool 1 in a hole made with the tip 3' of the first hook-shaped portion 1 on the sheets 105 wound at the through opening 51 of the second grip portion 50 of the second tool 1', by sliding the stem 2 up to bringing the grip portion 5 of the first tool 1 in abutment against the second grip portion 50 enclosed by the sheet 105 of the second tool 1'. At this point, the stem 2 will prevent the unwinding of the lateral edges of the sheet wound on the second grip portion 50, maintaining the two lateral edges 105' of the two flanked protection sheets 105 joined.

In accordance with a second embodiment of the invention, a tool (second tool 1') is once again constituted by only the grip portion of the above-described tool 1 (illustrated in figure 7), numbered as above with reference number 50 while its central opening will be indicated with 51, while a third tool 1" is constituted by at least one second stem 200 and preferably by two second stems 200 illustrated in figure 8 and constituted by a small rod, e.g. metallic, preferably provided with one end bent for an easier manipulation.

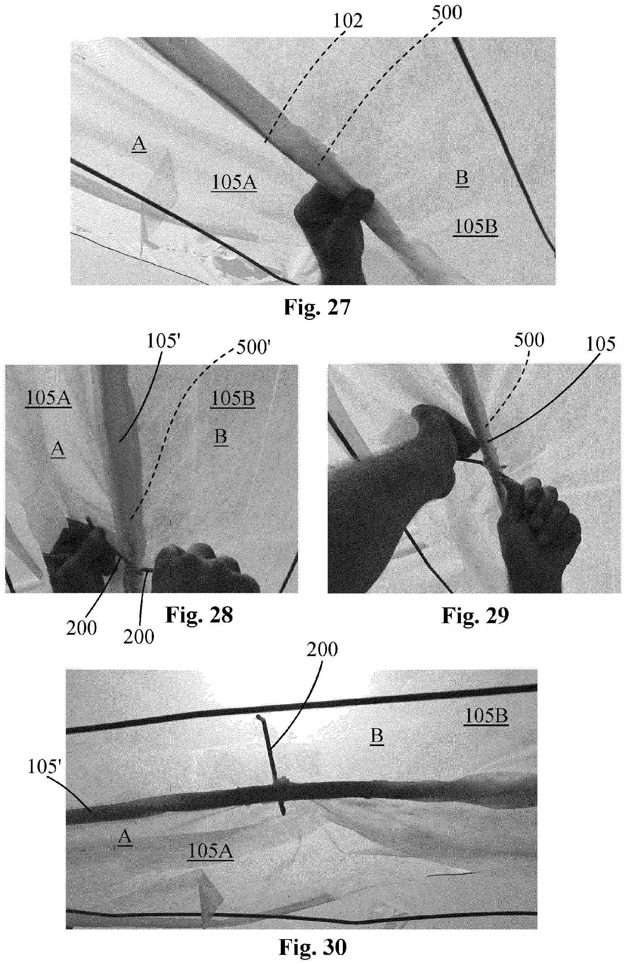

In this case, in accordance with the sequence of operations reported in figures 27-30, the tools 1', 1" according to the abovementioned second embodiment, will be employed for joining together the flanked lateral edges 105' of two sheets or the opposite edges of a cut on only one sheet 105. In operation, it will first be provided to wind the lateral edges 105' of two contiguous protection sheets 105 (i.e. constituted by the opposite edges of a cut on the sheet 105) around the second grip portion 50 of the second tool 1', and hence to insert the second stem 200 of the third tool 1" in a hole made with its tip on the wound sheets 105, at the through opening 51 of the second grip portion 50 of the second tool 1' for a depth adapted to bring its inserted end to interfere via rotation with the long sides 50' of the second grip portion 50. At this point, it is possible to wind the lateral edges 105' of the two contiguous protection sheets 105 on the second grip portion 50 of the second tool 1' by means of manual rotation of the second stem 200 for about 180 degrees up to interfering with one of the two protection sheets 105. At this point, by maintaining the edges 105' wound with the second stem 200 inserted in the through opening 51 of the second grip portion 50, it will be possible to insert - in the same through opening 51 of the same second grip portion 50 - another second stem 200, in this case by inserting it on an opposite side with respect to that in which the preceding second stem 200 was inserted, so as to be able to attain, by acting on such further second stem 200, a further rotation adapted to further wind the two flanked lateral edges 105' of the two contiguous sheets 105. It is thus possible to proceed in this manner by alternating the use of the two stems 200 (each first inserted in the second grip portion 50 and then rotated) in order to wind the two flanked lateral edges 105' of the two contiguous sheets 105 and then progressively bring the two protection sheets under tension. Finally, the second stem 200 will prevent the unwinding of the lateral edges of the sheet wound on the second grip portion 50, maintaining the two lateral edges 105' of the two flanked protection sheets 105 joined.

The invention thus described therefore attains the pre-established objects.

## Claims

1. Cover (100) for cultivations which comprises:
- a support structure (101) provided with at least one support cable (102) extended along a main longitudinal direction (Y);
- at least one protection sheet (105, 105A, 105B), which is supported by said support structure (101), is provided with a main longitudinal extension substantially parallel to said support cable (102) and converges towards said support cable (102) from one side thereof with a lateral edge (105');
- junction means of the lateral edge of said at least one protection sheet (105, 105A, 105B);
**characterized in that** said junction means comprise:
- a plurality of junction tools (1) placed spaced along the longitudinal extension of the lateral edge (105') of said protection sheet (105, 105A, 105B) and each provided with
- at least one stem (2) provided with a hook-shaped first end (3) and with a second end (4) opposite said first end (3);
- at least one elongated grip portion (5), which is transversely fixed to said stem (2) at an intermediate position of said grip portion (5);
- the lateral edge (105') of said protection sheet (105, 105A, 105B) being at least partially wound around said support cable (102) and traversed by said stem (2) due to through holes made on the lateral edge (105') of said protection sheet (105, 105A, 105B);
- the lateral edge (105') of said protection sheet (105, 105A, 105B) also being at least partially wound around the grip portion (5) of each said junction tool (1);
- the hook-shaped first end (3) of said stem (2) being connected to a support element (106) of said support structure (101).

2. Cover (100) for cultivations according to claim 1, **characterized in that** it comprises at least two said protection sheets, including at least a first and a second protection sheet (105A, 105B), which are supported by said support structure (101) and provided with a main longitudinal extension substantially parallel to said support cable (102); each protection sheet (105A, 105B) converging from opposite sides towards said support cable (102) with respective lateral edges (105'), longitudinally flanking each other at said support cable (102);
said junction means being adapted to join together the flanked lateral edges (105') of said two protection sheets (105A, 105B);
both the flanked lateral edges (105') of said two protection sheets (105A, 105B) being at least partially wound around said support cable (102) and traversed by said stem (2) due to through holes made on said superimposed two protection sheets (105A, 105B); the flanked lateral edges (105') of said two protection sheets (105A, 105B) also being at least partially wound around the grip portion (5) of each said junction tool (1);
the hook-shaped first end (3) of said stem (2) being connected to a support element (106) of said support structure (101).

3. Cover (100) for cultivations according to claim 1 or 2, **characterized in that** the grip portion (5) of each said junction tool (1) has elongated shape delimited by two substantially parallel long sides (5') and by two connector sides (5"), said stem (2) being extended with said second end (4) thereof from a median section of one of said long sides (5') of said grip portion (5).

4. Cover (100) for cultivations according to claim 3, **characterized in that** each said junction tool (1) has perimeter frame shape centrally delimiting a through opening (10).

5. Cover (100) for cultivations according to any one of the preceding claims, **characterized in that** said support element (106) of said support structure (101) is a connection cable parallel to said support cable (102).

6. Process for joining or supporting at least one sheet of a cover (100) for cultivations, which comprises:
- arranging a support structure (101) provided:
- with at least one support cable (102) extended along a main longitudinal direction (Y) with respect to which a first side (A) and a second side (B) are defined, and
- with at least one protection sheet (105, 105A, 105B), which is supported by said support structure (101), is provided with a main longitudinal extension substantially parallel to said support cable (102) and converges towards said support cable (102) with a lateral edge (105') thereof from one side thereof;
**characterized in that** it comprises:
- arranging a plurality of junction tools (1), each provided with
- at least one stem (2) provided with a hook-shaped first end (3) and with a second end (4) opposite said first end (3);
- at least one grip portion (5), which is fixed transverse to the second end (4) of said stem (2) at an intermediate position thereof;
- first winding of the lateral edge (105') of said at least one protection sheet (105, 105A, 105B) around said support cable (102), starting from the first side (A) of the latter,
- perforating said protection sheet (105, 105A, 105B) by means of the first end (3) of said stem (2), above said support cable (102) and starting from said first side (A) towards said second side (B) such that said stem (2) traverses said protection sheet (105, 105A, 105B), making thereon at least one first through hole at said first side (A), and subsequently it traverses the sheet (105, 105A, 105B) coming from said second side (B), making at least one second through hole thereon;
- sliding the stem (2) in said at least one first through hole and in said at least one second through hole up to bringing said grip portion (5) in abutment against the protection sheet (105, 105A, 105B);
- winding the protection sheet (105, 105A, 105B) on the grip portion (5) in abutment against the protection sheet (105, 105A, 105B) around said support cable (102), rotating said stem (2) from said second side (B) towards said first side (A);
- connecting the hook-shaped first end (3) of the stem (2) of said junction tool (1) to a support element (106) of said support structure (101), in particular obtained with a connection cable parallel to said support cable (102).

7. Process according to claim 6, which is adapted to join together two sheets of a cover (100) for cultivations, wherein the step of arranging the support structure (101) provides for arranging at least one first and at least one second protection sheet (105A, 105B), which are supported by said support structure (101), are provided with a main longitudinal extension substantially parallel to said support cable (102), and converge from opposite sides towards said support cable (102) with respective lateral edges (105'), longitudinally flanking each other at said support cable (102); wherein:
- said first winding occurs on the flanked lateral edges (105') of said two protection sheets (105A, 105B) around said support cable (102), starting from the first side (A) of the latter,
- said perforation takes place on said first and second protection sheets (105A, 105B) by means of the first end (3) of said stem (2), above said support cable (102) and starting from said first side (A) towards said second side (B) such that said stem (2) traverses said superimposed two protection sheets (105A, 105B), making thereon two said first through holes at said first side (A) and subsequently traverses the protection sheet (105B) coming from said second side (B), making thereon said at least one second through hole;
- said sliding of the stem (2) occurs in said first through holes and in said at least one second through hole up to bringing said grip portion (5) in abutment against the superimposed two protection sheets (105A, 105B);
- said winding of the superimposed protection sheets (105A, 105B) occurs on said grip portion (5) in abutment against the superimposed two protection sheets (105A, 105B), around said support cable (102), rotating said stem (2) from said second side (B) towards said first side (A).
